# EUROPÄISCHE PATENTSCHRIFT

(11) **EP 3 660 995 B1**
(45) Veröffentlichungstag und Bekanntmachung des Hinweises auf die Patenterteilung: **11.01.2023**
(21) Anmeldenummer: 18208917.7
(22) Anmeldetag: 28.11.2018
(51) Int. Cl.: H02G 3/22, B29C 45/00, B29C 45/16

(54) **INTEGRAL HERGESTELLTE KABELVERSCHRAUBUNG**
INTEGRALLY FORMED CABLE CONNECTION
PRESSE-ÉTOUPE FABRIQUÉ DE MANIÈRE INTÉGRALE

(43) Veröffentlichungstag der Anmeldung: 03.06.2020
(73) Patentinhaber: WISKA Hoppmann GmbH, 24568 Kaltenkirchen (DE)
(72) Erfinder: GEHRE, Peter, 24568 Kaltenkirchen (DE)
(74) Vertreter: Eisenführ Speiser

(56) Entgegenhaltungen:
- EP-A2- 2 793 334
- DE-U1-202009 007 433
- US-A- 3 281 295
- US-A- 5 705 112

## Beschreibung

Die Erfindung betrifft eine Kabelverschraubung zur Durchführung eines Kabels durch eine Wandöffnung mit einem Stutzenelement, einem Klemmabschnitt und einer Hutmutter. Ferner betrifft die Erfindung ein Verfahren zum Herstellen einer Kabelverschraubung.

Kabelverschraubungen werden insbesondere dazu eingesetzt, um eine elektrische Leitung durch eine Wandöffnung, beispielsweise eine Gehäusewandöffnung oder eine Schaltschrankwandöffnung, durchzuführen. Die Kabelverschraubungen dienen insbesondere dazu, die elektrischen Leitungen durch eine Klemmung in der Kabelverschraubung axial in ihrer Längsrichtung festzusetzen und damit eine Zugentlastung zu erzielen. Ferner können die elektrischen Leitungen vor einer Beschädigung durch Relativbewegungen im Betrieb an Kanten der Wandöffnung bewahrt werden. Daher ist es wünschenswert, dass die Kabelverschraubung das durch die Wandöffnung geführte Kabel zuverlässig klemmt und zugentlastet.

Kabelverschraubungen der eingangs genannten Art können zusätzliche Funktionen aufweisen. Insbesondere weisen Kabelverschraubungen oftmals eine abdichtende Funktion auf. Hierbei wird eine Leitung innerhalb der Kabelverschraubung gegen Flüssigkeitsdurchtritt und gegebenenfalls Gasdurchtritt abgedichtet. Weiterhin kann eine Funktion vorgesehen sein, die eine Erdung einer abgeschirmten Leitung über die Kabelverschraubung vorsieht, indem ein elektrischer Kontakt von einem abschirmenden Geflecht einer Leitung zu der Wand, in der die Wandöffnung ausgebildet ist, durch die Kabelverschraubung hergestellt wird.

Aus EP2793334A2 ist eine Kabelverschraubung bekannt, die aus einem Stutzenelement, einem Klemmelement und einer Hutmutter aufgebaut ist. Die Hutmutter kann auf das Stutzenelement aufgeschraubt werden, um das Klemmelement einwärts zu verformen. Bei dieser Kabelverschraubung sind das Klemmelement und das Stutzenelement einstückig ausgebildet.

Aus US3281295 ist ein Verfahren zur Herstellung von Schraubverschlüssen an Flaschen bekannt, bei dem in einem ersten Schritt eine Verschlusskappe mit Innengewinde in einer Form ausgeformt wird und in einem zweiten Schritt eine Hülse in das Innengewinde geformt wird und hierdurch eine Außengewindeform erhält und in einem darauf nachfolgenden Fertigungsschritt eine Flaschenhals an die Hülse angeklebt wird. US5705112 beschreibt ein ähnliches Verfahren, bei dem im zweiten Schritt die Flasche insgesamt ausgeformt wird.

DE202009007433U1 beschreibt eine Schlauch- oder Rohrverschraubung, bei der ein Schlauch oder Rohr zwischen einem Klammerkorb und einem Aufnahmedorn geklemmt wird, indem eine Klemmutter aufgeschraubt wird und hierdurch den Klammerkorb einwärts verformt.

Kabelverschraubungen werden in zahlreichen Anwendungen in großer Anzahl eingesetzt und unterliegen daher als Massenprodukte einem hohen Preisdruck, aus dem das Bestreben einer kostengünstigen Fertigungsweise resultiert. Daher werden sowohl Einsparungen bei den Materialkosten als auch bei den Fertigungskosten angestrebt. Neben dieser Anforderung an eine möglichste einfache und kostengünstige Fertigung ist es allerdings weiterhin angestrebt, dass Kabelverschraubungen durch den Benutzer, also den Monteur, möglichst schnell und fehlerfrei montiert werden können. Dies beinhaltet, dass weder eine fehlerhafte Montage, beispielsweise durch Kombination unpassender Teile oder fehlerhaftes Ausrichten / Ansetzen / Anziehen der Teile noch eine zeitaufwendige Auswahl der richtigen Teile wünschenswert ist. Dieses Bestreben nach hoher montagetechnischer Funktionalität steht üblicherweise dem Bestreben nach fertigungstechnischer Fertigung entgegen.

Der Erfindung liegt daher die Aufgabe zu Grunde, eine Kabelverschraubung bereitzustellen, welche die montagetechnische Funktionalität erhöht, ohne hierbei aber die Kosten der Fertigung zu erhöhen und gleichzeitig eine weiterhin langfristig zuverlässige Klemmung und Zugentlastung eines Kabels ermöglicht.

Gemäß eines ersten Aspekts der vorliegenden Erfindung wird diese Aufgabe gelöst durch eine Kabelverschraubung nach Anspruch 1.Erfindungsgemäß kann die Kabelverschraubung bevorzugt zusätzlich ein schlauchförmiges Dichtungselement aufweisen, das innerhalb des Kabelkanals am Stutzenelement angeordnet und mit dem Stutzenelement verbunden ist.

Der Erfindung liegt unter anderem die Erkenntnis zugrunde, dass die oftmals praktizierte Vormontage der Einzelteile einer Kabelverschraubung im Ganzen und das solcherart erfolgende in Verkehr bringen oder zumindest die Mitnahme solcherart vormontierter Kabelverschraubungen an den Montageort die Montage der Kabelverschraubung selbst in dem Gehäuse und an dem Kabel vereinfacht. Jedoch wird hierbei zusätzlicher Zeitaufwand bei der Vormontage erforderlich.

Die Bauteile derartiger Kabelverschraubungen, also das Stutzenelement, der Klemmabschnitt, die Hutmutter und gegebenenfalls das Dichtungselement, können in hoher Qualität einzeln gefertigt und manuell zusammengesetzt werden. Gleichwohl bedingt der Schritt des manuellen Zusammensetzens höhere Kosten aufgrund des damit verbundenen Personal- und Zeiteinsatzes.

Grundsätzlich beruht die Erfindung auf der Erkenntnis, dass ein vormontierter Zustand auch so erreicht werden kann, dass die Bauteile der Kabelverschraubung derart zusammengesetzt sind, dass diese aneinander befestigt sind, ohne dass bereits eine Klemmwirkung der Klemmelemente erzielt wird. Die Hutmutter muss demnach erfindungsgemäß nicht aus der vormontierten Position wieder teilweise oder vollständig demontiert werden, sondern bleibt in einer Position an dem Stutzenelement befestigt, in der sie nicht das Kabel klemmend mit den Klemmelementen zusammenwirkt. Somit können sich die Klemmelemente vorzugsweise in einem entspannten Zustand befinden.

In der hier beschriebenen Lösung wird die Kabelverschraubung integral gefertigt.

Hierbei werden das Stutzenelement, die Hutmutter und der die Klemmelemente aufweisende Klemmabschnitt in dem vormontierten Zustand durch einen Spritzgussvorgang in einem Werkzeug gefertigt.

Gegebenenfalls kann das Dichtungselement vorzugsweise bereits durch den Spritzgussvorgang mit dem Stutzenelement verbunden sein. Das Dichtungselement kann vorzugsweise formschlüssig, kraftschlüssig und/oder stoffschlüssig mit dem Stutzenelement verbunden werden.

Die Hutmutter aus dem zweiten Material ist derart ausgebildet, dass diese mit dem Stutzenelement mechanisch gekoppelt, also an dem Stutzenelement befestigt, und an dem Stutzenelement bewegbar ist. Auch die Hutmutter wird erfindungsgemäß in dem gleichen Fertigungsvorgang gefertigt und dabei also spritzgegossen. Dabei kann das Stutzenelement als Abschnitt der Form dienen, in der die Hutmutter gefertigt wird oder die Hutmutter kann umgekehrt als Abschnitt der Form dienen, in der das Stutzenelement gefertigt wird. Dies ist von der Fertigungsreihenfolge abhängig. Ergebnis des Fertigungsprozesses sind direkt miteinander verbundene und damit vormontierte Stutzenelement und Hutmutter. Die Besonderheit liegt hierbei darin, dass die Hutmutter auf dem Stutzenelement trotz der direkt aneinander erfolgenden Fertigung beweglich ist, um aus der ersten in die zweite Position oder umgekehrt bewegt werden zu können.

Erfindungsgemäß werden also die Hutmutter und das Stutzenelement aneinander angespritzt, ohne dass eine diese Relativbeweglichkeit hemmende Verbindung zwischen diesen Bauteilen erzeugt wird. Hierdurch wird erreicht, dass separate Bauteile der Kabelverschraubung in einem einzigen Fertigungsverfahren hergestellt werden und dadurch ein Zeitaufwand deutlich reduziert werden kann. Zudem hat die Fertigung dieser separaten Bauteile in dem vormontierten Zustand zur Folge, dass der Schritt des manuellen Zusammensetzens dieser Bauteile wegfällt und dadurch auch der Personalaufwand deutlich reduziert werden kann.

Die Beweglichkeit kann insbesondere erreicht werden, indem das Stutzenelement und die Hutmutter Kontakt im Bereich eines Gewindes, einer Verrastung, einer Bajonettkupplung oder dergleichen haben und folglich die eine Seite des Gewindes, der Verrastung oder Bajonetts an dem Stutzenelement oder der Hutmutter formgebend für den anderen, zusammenwirkenden Teil des Gewindes, der Verrastung oder Bajonetts an der Hutmutter oder entsprechend dem Stutzenelement dient. Nach der Fertigung werden die Hutmutter und das Stutzenelement gemeinsam und vormontiert der Werkzeugform entnommen und sind zwischen der ersten und zweiten Position beweglich zueinander.

Die für die Relativbeweglichkeit notwendige Vermeidung einer Verbindung zwischen Hutmutter und Stutzenelement kann durch fertigungstechnische Parameter oder Materialwahl oder eine Kombination erreicht werden. So kann beispielsweise das eine Material einen niedrigeren Schmelzpunkt als das andere Material haben, um eine Anschmelzung des formgebenden Teils zu vermeiden. Weiterhin kann durch Schwindungseffekte eine Trennung der beiden Teile bewirkt werden, beispielsweise indem ein außenliegendes Teil weniger schwindet als ein innenliegendes Teil, sodass ein Spalt zwischen den Teilen beim Schwinden entsteht. Auch können weitere Parameter wie Spritzdruck, Nachdruck, Formtemperatur, Spritztemperatur gewünschte Effekte wie Schwindung und Temperatur der Schmelze beim Zusammentreffen der beiden Teile an ihrer formgebenden Grenzfläche beeinflussen.

Vorteilhaft ist ferner, dass eine integrale Fertigung durch Spritzguss zur Folge hat, dass eine Verbindung zwischen den separaten Bauteilen besonders genau ausgestaltet werden kann. Insbesondere können eine Verbindungsseite der Hutmutter und eine Verbindungsseite des Stutzenelements korrespondierende Mittel aufweisen, die durch das Anspritzen der Materialien aneinander gebildet sind. Durch die besonders genaue Ausgestaltung der Verbindung kann eine zuverlässige Klemmung und Zugentlastung erzielt werden. Zudem kann hierdurch auch die Montage der Kabelverschraubung erleichtert werden.

Unter einem Stutzenelement kann vorzugsweise ein länglicher Hohlkörper mit der Längsachse verstanden werden. Vorzugsweise kann die Länge des Stutzenelements größer sein als ein Durchmesser des Stutzenelements. Insbesondere ist es bevorzugt, das Stutzenelement relativ steif, vorzugsweise formstabil, zu fertigen.

Durch das Dichtungselement kann das Kabel innerhalb der Kabelverschraubung abgedichtet werden. Dabei kann vorzugsweise verstanden werden, dass das Kabel, das durch die Kabelverschraubung zugentlastet und abgedichtet durch die Wandöffnung hindurchgeführt werden soll, innerhalb des schlauchförmigen Dichtungselements verläuft. Das Dichtungselement kann vorzugsweise durch das Festklemmen des Kabels innerhalb des Kabelkanals an die Außenfläche des Kabels angepresst werden. Dadurch kann die dichtende Wirkung erzeugt werden.

Die Klemmelemente können sich vorzugsweise im entspannten Zustand, also in der ersten Stellung, in axialer Richtung von dem Stutzenelement erstrecken. Insbesondere können sich die Klemmelemente in axialer Richtung nach radial auswärts von dem Stutzenelement erstrecken. Hierbei können die Klemmelemente als eine Art Steg ausgebildet sein. Die Klemmelemente können vorzugsweise eine Verdickung in radialer Richtung aufweisen. Die Klemmelemente können also als im Querschnitt etwa dreieckige Stege ausgebildet sein.

Vorzugsweise können die Klemmelemente in Umfangsrichtung wechselweise mit einer nach innen liegenden Spitze und einer nach innen liegenden Basis angeordnet sein.

Die Klemmelemente bzw. gegebenenfalls die Verdickung können vorzugsweise in einem entspannten Zustand in der ersten Stellung, in dem die Klemmelemente keine Klemmwirkung haben, den ersten Innendurchmesser begrenzen, der größer ist als der zweite Innendurchmesser, der durch die Klemmelemente bzw. gegebenenfalls die Verdickung in der zweiten Stellung begrenzt wird. Bevorzugt können die Klemmelemente radial, vorzugsweise axial-radial, beweglich, vorzugsweise verschwenkbar, ausgestaltet sein. Insbesondere können die Klemmelemente durch Bewegen der Hutmutter aus der ersten Position in die zweite Position am Stutzenelement radial einwärts bewegt, vorzugsweise verschwenkt werden, um eine Klemmwirkung zu erzielen.

Alternativ können sich die Klemmelemente in der ersten Stellung nach radial einwärts, vorzugsweise in axialer Richtung nach radial einwärts, von dem Stutzenelement erstrecken. Hierbei können die Klemmelemente durch Einführen eines Kabels vorzugsweise von der ersten Stellung in die zweite Stellung in axialer Richtung nach radial auswärts bewegt, vorzugsweise verschwenkt, werden. Der erste Innendurchmesser, der durch die Klemmelemente in der ersten Stellung begrenzt wird, kann vorzugsweise kleiner als der zweite Innendurchmesser sein, der durch die Klemmelemente in der zweiten Stellung begrenzt wird. Die Klemmwirkung kann hierbei vorzugsweise durch einen Durchmesser des Kabels selbst bewirkt werden.

Sofern auf auswärts und/oder einwärts Bezug genommen wird, beziehen sich diese Richtungsangaben auf das Stutzenelement, insbesondere den durch das Stutzenelement gebildeten Kabelkanal bzw. die Längsachse. Unter einwärts ist demnach eine Richtung ausgehend von dem Stutzenelement in den Kabelkanal, also vorzugsweise in Richtung der Längsachse, zu verstehen. Entsprechend ist unter auswärts eine Richtung ausgehend von dem Stutzenelement nach außen, also von der Längsachse weg, zu verstehen.

Unter einer Hutmutter wird ein Element verstanden, das als ein Hohlkörper ausgebildet ist und kraftschlüssige und/oder formschlüssige Verriegelungsmittel an einem Innenumfang aufweist. Die Verriegelungsmittel können vorzugsweise ausgebildet sein, um die Hutmutter formschlüssig und/oder kraftschlüssig an dem Stutzenelement in der zweiten Position zu verriegeln. Hierbei können die Verriegelungsmittel vorzugsweise als ein Innengewinde und/oder eine Rastmittel und/oder dergleichen ausgebildet sein. Eine Beschränkung auf ein Element, das lediglich zur Verschraubung ausgebildet ist, soll durch den Begriff Hutmutter nicht erfolgen.

Vorzugsweise kann der Klemmabschnitt aus dem ersten Material ausgebildet, insbesondere gespritzt, und die Hutmutter aus dem zweiten Material an dem Stutzenelement angespritzt sein. Der Klemmabschnitt und das Stutzenelement sind einstückig aus dem ersten Material ausgebildet.

Alternativ kann vorzugsweise die Hutmutter aus dem zweiten Material ausgebildet, insbesondere gespritzt, und der Klemmabschnitt aus dem ersten Material an der Hutmutter angespritzt sein. Der Klemmabschnitt und das Stutzenelement sind einstückig aus dem ersten Material ausgebildet und an die Hutmutter angespritzt.

Insbesondere bevorzugt ist es, wenn das erste Material dem zweiten Material entspricht und vorzugsweise ein Trennen der Hutmutter von dem Stutzenelement und gegebenenfalls dem Klemmabschnitt durch Aufbringen von Kraft erfolgt. Hierbei kann vorzugsweise eine Sollbruchstelle an der Verbindung zwischen der Hutmutter und dem Stutzenelement und/oder dem Klemmabschnitt vorgesehen sein.

Vorzugsweise kann ein Trennen der Hutmutter von dem Stutzenelement und/oder dem Klemmabschnitt durch Anspritzen des zweiten Bauteils, also der Hutmutter oder des Stutzenelements und gegebenenfalls des Klemmabschnitts, mit einer Temperatur, die das Material des ersten Bauteils nicht aufschmilzt und dadurch keine stoffschlüssige Verbindung entsteht. Hierzu können vorzugsweise ein erstes Material und ein zweites Material mit unterschiedlichen Schmelzpunkten gewählt werden.

Alternativ können vorzugsweise das erste Material und das zweite Material unterschiedliche Materialien sein und/oder unterschiedliche Materialbestandteile umfassen und ausgebildet sein, um eine Trennung zwischen der Hutmutter und dem Stutzenelement bzw. gegebenenfalls dem Klemmabschnitt zu ermöglichen.

Besonders bevorzugt ist es, dass das erste Material und das zweite Material Kunststoffmaterialien sind.

Vorzugsweise kann das erste Material ein Hartkunststoff sein und insbesondere Polypropylen und/oder Polyamid und/oder Polycarbonat und/oder Polyvinylchlorid und/oder Polyethylen und/oder ein sonstiger thermoplastischer Kunststoff sein. Alternativ kann das erste Material einen Hartkunststoff, insbesondere Polypropylen und/oder Polyamid und/oder Polycarbonat und/oder Polyvinylchlorid und/oder Polyethylen und/oder ein sonstiger thermoplastischer Kunststoff, umfassen.

Gemäß einer ersten bevorzugten Ausführungsform weist das erste Material eine erste Schwindung und das zweite Material eine zweite Schwindung auf, die kleiner ist als die erste Schwindung.

Unter Schwindung kann vorzugsweise ein physikalischer Prozess verstanden werden, der mit einem Abkühlen eines gespitzten Materials einsetzten kann. Eine Schwindung kann vorzugsweise auch durch Trocknung oder chemische bzw. physikalische Umbaumechanismen im Material stattfinden. Hierbei können vorzugsweise Parameter wie das Volumen und die Größe des aus dem Material gespritzten Bauteils abnehmen. Diese Abnahme kann vorzugsweise ohne Entfernung eines Materials oder Ausüben eines Drucks erfolgen. Die Abnahme, also die Schwindung, stellt eine spezifische Kenngröße des verwendeten Materials dar und kann vorzugsweise prozentual angegeben werden.

Die Schwindung kann vorzugsweise in zwei Stufen stattfinden. Hierbei kann sich die Schwindung vorzugsweise aus einer Verarbeitungsschwindung, die unmittelbar beim oder nach dem Spritzen erfolgt, und einer Nachschwindung zusammensetzen. Alternativ kann die auftretende Schwindung des ersten Materials und/oder des zweiten Materials der Verarbeitungsschwindung oder der Nachschwindung entsprechen. Die Nachschwindung kann vorzugsweise durch eine Nachkristallisation und/oder in einer strukturellen entropiegeprägten Neuausrichtung der Molekülketten des Materials infolge von Umorientierungen erfolgen. Ferner kann vorzugsweise eine Entformungsschwindung infolge von Volumenkontraktion auftreten.

Grundsätzlich kann die Schwindung von unterschiedlichen Faktoren und Parametern beeinflusst werden. Beispielsweise kann das verwendete Material, eine Temperatur des flüssigen Materials beim Spritzen bzw. die Temperatur im Spritzgießwerkzeug, ein Spritzdruck, ein Nachdruck und eine Umgebungstemperatur beim Abkühlen des Materials sowie die Zeit des Abkühlens einen Einfluss auf die Schwindung haben. Vorzugsweise kann auch das Bauteil selbst einen Einfluss auf die Schwindung haben. Hierbei können insbesondere eine Größe, eine Komplexität des Bauteils und die Wandstärken eine Rolle spielen. Ferner vorzugsweise kann eine Bauart und Ausprägung des Spritzgießwerkzeugs, insbesondere ein Temperaturhaushalt des Spritzgießwerkzeugs und gegebenenfalls eine Länge und Art des Angusses, ebenfalls einen Einfluss auf die Schwindung haben.

Insbesondere bei sonst gleichbleibenden Bedingungen und Parametern, kann die Schwindung vorzugsweise durch die Wahl des Materials beeinflusst werden. Grund hierfür kann vorzugsweise eine chemische Zusammensetzung des Materials - insbesondere amorphe oder teilkristalline Materialien - und eine sich einstellende Morphologie sein. Unterschiedliche Materialien, insbesondere unterschiedliche Kunststoffe, reagieren anders auf die Einflüsse und Parameter des Spritzgussverfahrens.

Die Schwindung kann vorzugsweise auch durch Verstärkungsfasern und/oder Füllerkomponenten beeinflusst werden. Durch ein Anreichern des Materials mit Verstärkungsfasern und/oder Füllerkomponente kann vorzugsweise die Schwindung verringert werden. Beispielsweise können mit Glasfasern die Werkstoffeigenschaften verändert, insbesondere eine Stabilität erhöht, und eine Schwindung bei sonst gleichbleibenden Parametern des Spritzgussverfahrens reduziert werden. Als weitere Beispiele für Verstärkungsfasern und/oder Füllerkomponenten können vorzugsweise Glaskugeln oder Talkum genannt werden. Ferner kann vorzugsweise durch die Zugabe von Nukleierungsmitteln und/oder Farbpigmenten die Schwindung beeinflusst werden.

Daher ist es insbesondere bevorzugt, wenn das zweite Material Verstärkungsfasern und/oder Füllerkomponenten umfasst. Hierbei kann das zweite Material vorzugsweise zudem auch Polypropylen und/oder Polyamid und/oder Polycarbonat und/oder Polyvinylchlorid und/oder Polyethylen und/oder ein sonstiger thermoplastischer Kunststoff, vorzugsweise das erste Material, umfassen. Durch diese Ausgestaltung kann die Schwindung des zweiten Materials reduziert werden.

Insbesondere ist es bevorzugt, dass die auftretende Schwindung des ersten Materials und/oder des zweiten Materials ausreichend ist, um eine Trennung des ersten Materials und des zweiten Materials voneinander zu erzielen. Demnach soll vorzugsweise durch unterschiedlich freies Schwinden des ersten Materials und des zweiten Materials ein Stoffschluss zwischen dem ersten Material und dem zweiten Material vermieden werden. Dadurch kann vorzugsweise eine im Wesentlichen zeitgleiche Fertigung der separaten Bauteile in einem Fertigungsprozess ermöglicht werden. Gleichzeitig ist es bevorzugt, dass die Schwindung derart gering ist, dass diese sich nicht nachteilig auf die Maßhaltigkeit und Oberflächenqualität des herzustellenden Bauteils auswirkt. Demnach sollen trotz Schwindungen Bauteile, also die Hutmutter und das Stutzenelement sowie der Klemmabschnitt, mit einer hohen Maßhaltigkeit und Oberflächenqualität hergestellt werden können. Aufgrund dieser Ausgestaltung kann eine zuverlässige Klemmung und Zugentlastung bei gleichzeitig reduzierten Fertigungskosten erzielt werden.

Beispielsweise kann das erste Material ein amorpher Kunststoff und das zweite Material ein teilkristalliner Kunststoff sein. Bei teilkristallinen Kunststoffen kann die Schwindung maßgeblich von kristallinen Grad und dem Temperaturgradienten bzw.-profil im Spritzwerkzeug abhängen. Amorphe Kunststoffe können vorzugsweise eine Schwindung von etwa 0,2 % bis 0,8 % aufweisen. Im Gegensatz dazu können teilkristalline Kunststoffe vorzugsweise eine Schwindung von etwa 0,4 % bis 5 % aufweisen. Hierbei kann vorzugsweise die Schwindung des amorphen Kunststoffes der Verarbeitungsschwindung entsprechen.

Die Schwindung des teilkristallinen Kunststoffes kann sich vorzugsweise aus Verarbeitungsschwindung und Nachschwindung zusammensetzen. Aufgrund der Tatsache, dass vorzugsweise nur bei dem teilkristallinen Kunststoff, also dem zweiten Material, eine Nachschwindung auftritt, kann die Hutmutter von dem Stutzenelement und dem Klemmabschnitt getrennt werden.

Gemäß einer weiter bevorzugten Fortbildung der Kabelverschraubung tritt an einer Verbindung zwischen der Hutmutter und dem Stutzenelement ein Spiel auf. Unter einem Spiel kann vorzugsweise verstanden werden, dass zwei ineinandergreifende oder nebeneinander angeordnete Bauteile eine Bewegungsfreiheit haben, also vorzugsweise frei beweglich und gleichzeitig aneinander befestigt sind. Hierbei kann insbesondere vorgesehen sein, dass das Spiel zwischen der Hutmutter und dem Stutzenelement lediglich in der ersten Position auftritt und die Hutmutter und das Stutzenelement in der zweiten Position formschlüssig und/oder kraftschlüssig aneinander befestigt werden können. Hierdurch kann eine zuverlässige Klemmung und Zugentlastung ermöglicht werden.

Vorzugsweise kann das Dichtungselement aus einem dritten Material ausgebildet sein. Das dritte Material kann hierbei vorzugsweise verschieden vom ersten und/oder zweiten Material sein.

Insbesondere ist es bevorzugt, dass das Dichtungselement, vorzugsweise aus dem dritten Material stoffschlüssig mit dem Stutzenelement und/oder dem Klemmabschnitt verbunden ist. Bei dieser Ausgestaltung ist das Dichtungselement mit dem Stutzenelement und/oder dem Klemmabschnitt verbunden und bildet dadurch ein integrales Bauteil mit dem Stutzenelement und/oder dem Klemmabschnitt. Hierdurch kann einerseits die Montage erleichtert werden, da beispielsweise ein Verrutschen des Dichtungselements vermieden werden kann. Ferner können dadurch die Fertigungskosten weiter reduziert werden, da eine geringere Anzahl an Bauteilen bereitgehalten, miteinander kombiniert und zusammengestellt werden muss.

Vorzugsweise kann das Dichtungselement bereitgestellt werden und das Stutzenelement und/oder der Klemmabschnitt an dem Dichtungselement angespritzt werden, sodass eine stoffschlüssige Verbindung entsteht.

Insbesondere ist es bevorzugt, dass das Dichtungselement an dem Stutzenelement und/oder dem Klemmabschnitt angespritzt ist. Durch diese Ausgestaltung wird eine einstückige Ausgestaltung von Stutzenelement, Klemmabschnitt und Dichtungselement bereitgestellt, die gleichzeitig niedrige Fertigungskosten und vorteilhafte Materialeigenschaften realisiert.

Eine weiter bevorzugte Ausführungsform sieht vor, dass die Kabelverschraubung ferner ein schlauchförmiges Dichtungselement umfasst, das innerhalb des Kabelkanals am Stutzenelement angeordnet und mit dem Stutzenelement verbunden ist, wobei das Dichtungselement aus einem dritten Material ausgebildet ist, wobei das Dichtungselement an dem Stutzenelement angespritzt und stoffschlüssig mit dem Stutzenelement verbunden ist.

Vorzugsweise kann das Dichtungselement, insbesondere fertig hergestellt, bereitgestellt und das Stutzenelement an dem Dichtungselement angespritzt werden.

Noch weiter ist es bevorzugt, dass das dritte Material einen niedrigeren Elastizitätsmodul aufweist als das erste Material und/oder das zweite Material. Insbesondere ist es bevorzugt, wenn das Dichtungselement aus einem Kunststoff mit hoher Elastizität ausgebildet ist, beispielsweise einem Elastomer. Insbesondere können hierbei silikonbasierte oder polyurethanbasierte, insbesondere gummielastische Kunststoffe zum Einsatz kommen. Durch diese Ausgestaltung kann eine besonders zuverlässige Abdichtung des Kabels in dem Kabelkanal erzielt werden.

Gemäß einer weiter bevorzugten Fortbildung der Kabelverschraubung ist vorgesehen, dass ein Abschnitt des Stutzenelements eine Außenseite aufweist, die formgebend für eine Innenseite eines Abschnitts der Hutmutter ist, oder ein Abschnitt der Hutmutter eine Innenseite aufweist, die formgebend für eine Außenseite eines Abschnitts des Stutzenelements ist. Gemäß dieser Fortbildung, kann vorzugsweise zunächst ein erstes Bauteil, also die Hutmutter oder das Stutzenelement und der Klemmabschnitt, gespritzt werden und dessen Ausgestaltung, insbesondere dessen Formgebung, für eine Ausgestaltung, insbesondere eine Formgebung, eines zweiten Bauteils, also entsprechend das Stutzenelement und der Klemmabschnitt oder die Hutmutter, genutzt werden. Durch Anspritzen des zweiten Bauteils an das erste Bauteil kann das zweite Bauteil entsprechend der Form des ersten Bauteils gefertigt werden. Dadurch kann vorzugsweise eine besonders passgenaue Verbindung zwischen diesen Bauteilen erzielt werden.

Gemäß dieser Fortbildung, kann die Kabelverschraubung vorzugsweise durch Aufschrauben der Hutmutter aus dem vormontierten Zustand in den montierten Zustand überführt werden.

Insbesondere ist es bevorzugt, dass an dem Abschnitt der Außenseite des Stutzenelements und an dem Abschnitt der Innenseite der Hutmutter jeweils Verriegelungsmittel ausgebildet sind, die miteinander in Eingriff gebracht werden können. Diese Verriegelungsmittel sind vorzugsweise ausgebildet, um die Hutmutter in der zweiten Position an dem Stutzenelement zu verriegeln.

Diese Verriegelungsmittel können vorzugsweise als formschlüssige und/oder kraftschlüssige Verriegelungsmittel ausgebildet sein. Durch derartige Verriegelungsmittel kann vorzugsweise ein versehentliches Lösen einer Spannwirkung und Zugentlastung des Kabels vermieden werden.

Besonders bevorzugt ist es, dass die Außenseite des Abschnitts des Stutzenelements als ein Außengewinde und die Innenseite des Abschnitts der Hutmutter als ein Innengewinde ausgebildet sind, wobei das Außengewinde des Stutzenelements und das Innengewinde der Hutmutter in Eingriff gebracht sind, wobei das Innengewinde der Hutmutter in der zweiten Position formschlüssig und/oder kraftschlüssig mit dem Außengewinde des Stutzenelements verbunden ist, wobei vorzugsweise das Innengewinde der Hutmutter linksgängig ausgebildet ist.

Durch diese Ausgestaltung der Außenseite des Abschnitts des Stutzenelements und der Innenseite des Abschnitts der Hutmutter kann das Außengewinde an dem Innengewinde oder das Innengewinde an dem Außengewinde angeformt sein. Hierdurch kann eine besonders einfache und exakte Ausgestaltung des Außengewindes und des Innengewindes erzielt werden.

Das Außengewinde und das Innengewinde können vorzugsweise selbsthemmend ausgebildet sein. Ein selbsthemmendes Gewinde kann eine Gewindesteigung aufweisen, die ein ungewolltes Lösen der Hutmutter vom Stutzenelement verhindert.

Insbesondere ist es bevorzugt, dass die Hutmutter ein linksgängiges Innengewinde aufweist. Bei dieser Ausgestaltung kann sich die Hutmutter in der ersten Position auf dem Stutzenelement befinden und durch Aufschrauben in einer gewohnten Drehbewegung in die zweite Position am Stutzenelement in Richtung des Klemmabschnitts bewegt werden.

Besonders bevorzugt ist es, dass das Stutzenelement einen Befestigungsflansch aufweist, wobei die Hutmutter in der ersten Position an dem Befestigungsflansch anliegt und von der ersten Position in die zweite Position von dem Befestigungsflansch wegbewegbar ist, wobei die Hutmutter eine Spannfläche aufweist, die mit den Klemmelementen zusammenwirkt und die Klemmelemente in der zweiten Position in die zweite Stellung drückt, wobei die Klemmelemente in der zweiten Stellung den zweiten Innendurchmesser begrenzen, der kleiner ist als der erste Innendurchmesser.

Die Bewegung von dem Befestigungsflansch weg beschreibt hierbei die Bewegung der Hutmutter am Stutzenelement in Richtung des Klemmabschnitts. Demnach ist es besonders vorteilhaft das Innengewinde der Hutmutter linksgängig auszugestalten, um ein Verklemmen der Klemmelemente durch eine gewohnte Drehbewegung zu ermöglichen. Hierdurch kann eine besonders einfache Montage in gewohnter Weise durchgeführt werden.

Alternativ kann das Innengewinde der Hutmutter auch rechtsgängig ausgestaltet werden.

Durch das Aufschrauben der Hutmutter aus der ersten Position in die zweite Position kann die radial einwärts gerichtete Bewegung der Klemmelemente bewirkt werden. Hierzu weist die Hutmutter die Spannfläche auf, die mit den Klemmelementen zusammenwirkt. Die Spannfläche kann vorzugsweise als Keil wirkende Fläche, beispielsweise eine konische oder verrundete Innenfläche, ausgebildet sein und eine radial einwärts gerichtete Bewegung der Klemmelemente bewirken, wenn sich die Hutmutter im Zuge des Aufschraubvorgangs axial in Richtung der Klemmelemente, also gegebenenfalls von dem Befestigungsflansch weg, bewegt. Dabei ist zu verstehen, dass die Hutmutter die axiale Öffnung am Ende aufweist, um eine Durchführung des Kabels, welches in der Kabelverschraubung verspannt und abgedichtet wird, zu ermöglichen. Ein Hohlraum der Hutmutter kann vorzugsweise an der axialen Öffnung einen maximalen Durchmesser aufweisen, der sich in Richtung des Verriegelungsmittels, vorzugsweise des Innengewindes, der Hutmutter verringert, um die Verklemmung der Klemmelemente in der zweiten Position zu ermöglichen.

Vorzugsweise können die Klemmelemente zumindest einen Abschnitt aufweisen, der weniger steif, vorzugsweise elastischer, ausgestaltet ist, um ein Bewegen, vorzugsweise ein Verschwenken, der Klemmelemente aus der ersten Stellung in die zweite Stellung zu ermöglichen.

Insbesondere bevorzugt ist es, dass sich die Klemmelemente vom Stutzenelement erstrecken und zwischen den Klemmelementen und dem Stutzenelement ein Gelenkabschnitt ausgebildet ist, und sich die Klemmelemente ausgehend von dem Gelenkabschnitt in der ersten Stellung nach radial auswärts erstrecken und mittels des Gelenkabschnitts nach radial einwärts verschwenkbar sind. Die Gelenkabschnitte können hierbei vorzugsweise elastischer und/oder weniger steif ausgestaltet sein als die Klemmelemente. Hierdurch können die Klemmelemente einfacher verschwenkt werden und dadurch die Montage erleichtert werden. Die elastischere Ausgestaltung der Gelenkabschnitte kann beispielsweise durch eine Materialverdünnung, vorzugsweise ein Filmscharnier, oder ein elastischeres Material im Bereich des Gelenkabschnitts erzielt werden. Hierdurch kann erreicht werden, dass die Klemmelemente und das Stutzenelement steifer sind als der Gelenkabschnitt und folglich der Gelenkabschnitt eine Relativbewegung zwischen den Klemmelementen und dem Stutzenelement erheblich erleichtert. Gleichzeitig kann durch die höhere Steifigkeit der Klemmelemente und des Stutzenelements in Relation zu dem Gelenkabschnitt eine zuverlässige Klemmung mit definierter Klemmkraft erzielt werden. Durch diese Ausgestaltung können vorzugsweise unterschiedliche Kabel mit unterschiedlichen Durchmessern von einer Kabelverschraubung zuverlässig geklemmt werden. Hierbei kann eine Vorratshaltung verschiedener Kabelverschraubungen gering gehalten werden.

Die elastischere und/oder weniger steife Ausgestaltung des Gelenkabschnitts hat vorzugsweise eine leichtere Beweglichkeit der Klemmelemente relativ zu dem Stutzenelement zur Folge. Aus diesem Grund kann das Verschwenken der Klemmelemente durch die Spannfläche mit einem relativ steilen Keil- bzw. Kegelwinkel ausgeführt sein, da keine hohe Spannkraft erforderlich ist, um die Klemmelemente zu bewegen. Durch diesen steilen Keil- bzw. Kegelwinkel wird es möglich die Klemmelemente aus der erste Stellung in die demgegenüber einen erheblich geringeren Innendurchmesser umschreibende zweite Stellung zu bringen, indem die Hutmutter aus der ersten Position über einen in Relation zu dieser Durchmesseränderung geringen Weg in die zweite Position wird die Montage und Zugentlastung des Kabels in der erfindungsgemäßen Kabelverschraubung wird hierdurch erheblich vereinfacht.

Gemäß einer weiter bevorzugten Fortbildung ist vorgesehen, dass das Stutzenelement einen sich axial erstreckenden Befestigungsbereich mit einer Befestigungsmutter aufweist, die mit dem Befestigungsbereich mechanisch gekoppelt ist und aus einer ersten Position am Befestigungsbereich in eine zweite Position am Befestigungsbereich bewegbar ist, wobei die Befestigungsmutter aus dem zweiten Material ausgebildet ist. Durch diese Ausgestaltung kann eine Kabelverschraubung mit einem Stutzenelement, einem Klemmabschnitt, einer Hutmutter und einer Befestigungsmutter integral hergestellt werden und dadurch die Fertigungskosten weiter reduziert werden.

Unter einer Befestigungsmutter kann vorzugsweise ein Element verstanden werden, das als ein Hohlkörper ausgebildet ist und Verriegelungsmittel, vorzugsweise kraftschlüssige und/oder formschlüssige Verriegelungsmittel, an einem Innenumfang aufweist. Die Verriegelungsmittel können vorzugsweise ausgebildet sein, um die Befestigungsmutter formschlüssig und/oder kraftschlüssig an dem Befestigungsbereich zu verriegeln. Hierbei können die Verriegelungsmittel vorzugsweise als ein Innengewinde und/oder eine Rastmittel und/oder dergleichen ausgebildet sein. Eine Beschränkung auf ein Element, das lediglich zur Verschraubung ausgebildet ist, soll durch den Begriff Befestigungsmutter nicht erfolgen.

Ein derartiger Befestigungsbereich mit Befestigungsmutter ermöglicht eine sichere Verankerung der Kabelverschraubung in der Wandöffnung. Hierbei kann beispielsweise eine Verschraubung vorgesehen sein, die gegen den Flansch wirkt.

Der Befestigungsbereich kann vorzugsweise formschlüssige und/oder kraftschlüssige Verriegelungsmittel umfassen, die ausgebildet sind um die Befestigungsmutter formschlüssig und/oder kraftschlüssig an dem Befestigungsbereich in einer zweiten Position zu verriegeln.

Insbesondere ist es bevorzugt, dass der Befestigungsbereich ein Außengewinde aufweist, das mit einem Innengewinde der Befestigungsmutter in Eingriff gebracht ist, wobei das Innengewinde der Befestigungsmutter in der zweiten Position formschlüssig und/oder kraftschlüssig mit dem Außengewinde des Befestigungsbereichs verbunden ist. Hierdurch kann eine zuverlässige Verankerung in der Wandöffnung erzielt werden.

Vorzugsweise kann ein Abschnitt des Befestigungsbereichs eine Außenseite aufweisen, die formgebend für eine Innenseite der Befestigungsmutter ist, oder die Befestigungsmutter eine Innenseite aufweisen, die formgebend für eine Außenseite eines Abschnitts des Befestigungsbereichs ist. Gemäß dieser Fortbildung, kann vorzugsweise zunächst ein erstes Bauteil, also das Stutzenelement mit Befestigungsbereich oder die Befestigungsmutter, gespritzt werden und dessen Ausgestaltung, insbesondere dessen Formgebung, für eine Ausgestaltung, insbesondere eine Formgebung, eines zweiten Bauteils, also entsprechend der Befestigungsmutter oder des Stutzenelements mit Befestigungsbereich, genutzt werden. Durch Anspritzen des zweiten Bauteils an das erste Bauteil kann das zweite Bauteil entsprechend der Form des ersten Bauteils gefertigt werden. Dadurch kann vorzugsweise eine besonders passgenaue Verbindung zwischen diesen Bauteilen erzielt werden.

Für weitere Vorteile, Ausführungsvarianten und Ausführungsdetails der Ausbildung der Befestigungsmutter an dem Befestigungsbereich wird auch auf die zuvor erfolgte Beschreibung zu der Ausbildung der Hutmutter an dem Stutzenelement verwiesen.

Gemäß einem zweiten Aspekt der vorliegenden Erfindung wird die eingangs genannte Aufgabe gelöst durch ein Verfahren nach Anspruch 12.

Insbesondere bevorzugt kann das Verfahren zum Herstellen einer Kabelverschraubung, folgende Schritte umfassen: Spritzen eines Stutzenelements mit einem innenliegenden Kabelkanal und eines an dem Stutzenelement angeordneten Klemmabschnitts mit Klemmelementen aus einem ersten Material, Verbinden eines Dichtungsabschnitts mit dem Stutzenelement in dem Kabelkanal und Anspritzen einer Hutmutter aus einem zweiten Material an das Stutzenelement und den Klemmabschnitt.

Gemäß einem dritten Aspekt der vorliegenden Erfindung wird die eingangs genannte Aufgabe gelöst durch ein Verfahren nach Anspruch 13.

Insbesondere bevorzugt kann das Verfahren zum Herstellen einer Kabelverschraubung, folgende Schritte umfassen: Spritzen einer Hutmutter aus einem zweiten Material, Anspritzen eines Stutzenelements mit einem innenliegenden Kabelkanal und eines an dem Stutzenelement angeordneten Klemmabschnitts mit Klemmelementen aus einem ersten Material an die Hutmutter und Verbinden eines Dichtungsabschnitts mit dem Stutzenelement in dem Kabelkanal.

Vorzugsweise kann der zweite Aspekt und/oder der dritte Aspekt den Schritt umfassen: Anspritzen des Dichtungsabschnitts aus einem dritten Material an das Stutzenelement in dem Kabelkanal.

Insbesondere bevorzugt können der zweite Aspekt und/oder der dritte Aspekt den Schritt umfassen: Anspritzen einer Befestigungsmutter an einen Befestigungsbereich des Stutzenelements aus dem zweiten Material.

Vorzugsweise können hierbei die Befestigungsmutter und die Hutmutter gleichzeitig an dem Stutzenelement angespritzt werden oder gleichzeitig gespritzt werden. Dadurch kann zusätzlich Zeit und damit einhergehend Fertigungskosten reduziert werden.

Ferner können die Verfahren gemäß dem zweiten und/oder dem dritten Aspekt der Erfindung den Schritt umfassen: Trennen der Hutmutter und des Stutzenelements voneinander, vorzugsweise Erzeugen eines Spiels an einer Verbindung zwischen der Hutmutter und dem Stutzenelement. Dies kann vorzugsweise durch einen Schwindungsprozess, insbesondere einer Abkühlung des ersten Materials und/oder des zweiten Materials erfolgen.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen verwiesen.

Bevorzugte Ausführungsbeispiele werden exemplarisch anhand der beiliegenden Figuren erläutert. Es zeigen:
- Fig. 1: eine Kabelverschraubung in einem vormontierten Zustand;
- Fig. 2: eine Schnittansicht der Kabelverschraubung in dem vormontierten Zustand gemäß Fig. 1;
- Fig. 3: die Kabelverschraubung gemäß Fig. 1 in einem montierten Zustand;
- Fig. 4: eine Schnittansicht der Kabelverschraubung in dem montierten Zustand gemäß Fig. 3;
- Fig. 5: eine Schnittansicht eines Stutzenelements mit einem Klemmabschnitt;
- Fig. 6: eine Schnittansicht eines Stutzenelements mit einem Klemmabschnitt und eines Dichtungselements;
- Fig. 7: eine Schnittansicht eines Stutzenelements mit einem Klemmabschnitt, eines Dichtungselements und einer Hutmutter; und
- Fig. 8: eine Schnittansicht eines Stutzenelements mit einem Klemmabschnitt und einem Befestigungsbereich, eines Dichtungselements, einer Hutmutter und einer Befestigungsmutter.

In den Figuren sind gleiche oder im Wesentlichen funktionsgleiche bzw. -ähnliche Elemente mit den gleichen Bezugszeichen bezeichnet.

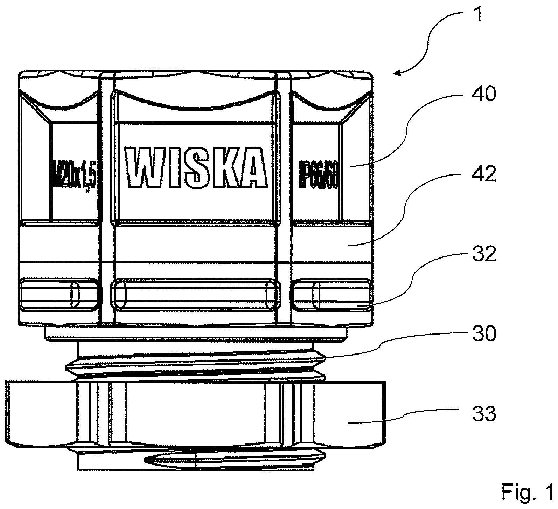

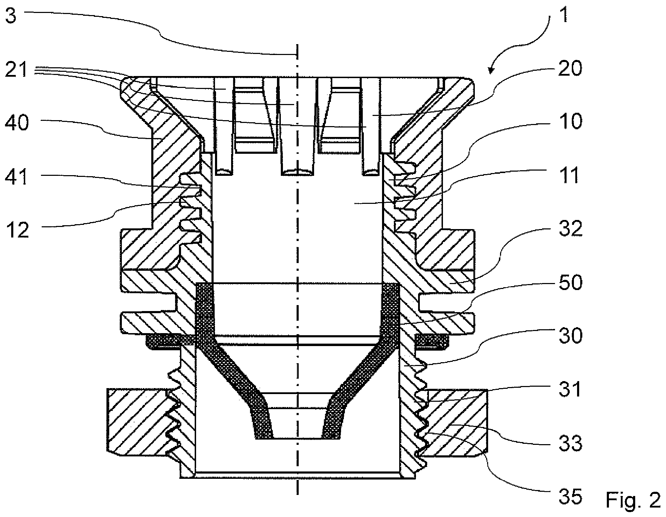

Bezugnehmend zunächst auf die Figuren 1 und 2 ist eine Kabelverschraubung 1 in einem Zustand abgebildet, wie die Kabelverschraubung nach dem Spritzgussvorgang einem Werkzeug entnommen wird. Eine Hutmutter 40 ist hierbei an ein Stutzenelement 10 angespritzt und relativ zum Stutzenelement beweglich. Es handelt sich folglich um einen vormontierten Zustand - ohne dass eine Vormontage im eigentlichen Sinne erfolgt. Stattdessen ist der Vorgang der Vormontage integral mit dem Ausformen, also Fertigen der Teile im Spritzguss. In dem vormontierten Zustand ist eine Hutmutter 40 an dem Stutzenelement 10 angeordnet und daran befestigt, sodass sich Klemmelemente 21 eines Klemmabschnitts 20, der an dem Stutzenelement 10 angeordnet ist, in einem entspannten Zustand befinden. In dem entspannten Zustand der Klemmelemente 21 befinden sich diese in einer ersten Stellung, in der sie einen ersten Innendurchmesser begrenzen. In dieser ersten Stellung erzeugen die Klemmelemente 21 keine Klemmwirkung.

Figur 1 zeigt die Kabelverschraubung 1 mit einer Hutmutter 40, die auf dem Stutzenelement derart angeordnet ist, dass diese an einem Befestigungsflansch 32 aufliegt. Das Stutzenelement weist hierbei einen Befestigungsbereich 30 auf, an dem eine Befestigungsmutter 33 angeordnet ist.

Gemäß der vorliegenden Erfindung wird die Kabelverschraubung 1 vorzugsweise in dem vormontierten Zustand integral hergestellt. Dadurch kann die Kabelverschraubung 1 in dem vormontierten Zustand bereitgestellt und in Verkehr gebracht werden, ohne dass zusätzlich die Bauteile der Kabelverschraubung 1 manuell zusammengesetzt werden müssen.

In Figur 2 ist eine Schnittansicht der Kabelverschraubung 1 gemäß Figur 1 dargestellt. Diese Schnittansicht zeigt das Stutzenelement 10 mit einem Klemmabschnitt 20, der Klemmelemente 21 aufweist. Die Klemmelemente 21 sind in diesem vormontierten Zustand in einer Stellung, die eine Erstreckung in axialer Richtung nach radial auswärts darstellt. Zudem weist das Stutzenelement 10 einen Befestigungsbereich 30 auf, an dem die Befestigungsmutter 33 angeordnet ist. Das Stutzenelement 10 umfasst ferner den Befestigungsflansch 32 an dem die Hutmutter 40, die an dem Stutzenelement 10 angeordnet ist, aufliegt.

Die Hutmutter 40 weist ein Innengewinde 41 auf, das mit einem Außengewinde 12 des Stutzenelements in Eingriff gebracht ist. Auch der Befestigungsbereich 30 des Stutzenelements 10 weist ein Außengewinde 31 auf, das mit einem Innengewinde 35 der Befestigungsmutter 33 in Eingriff gebracht ist.

Das Stutzenelement 10 ist als ein Hohlkörper ausgebildet und weist einen innenliegenden Kabelkanal 11 auf. In diesem Kabelkanal 11 erstreckt sich eine Längsachse 3 der Kabelverschraubung 1. Ferner ist ein Dichtungselement 50 in dem Kabelkanal 11 angeordnet.

Das Stutzenelement 10 mit dem Befestigungsbereich 30 ist einstückig mit dem Klemmabschnitt 20 und rotationssymmetrisch entlang der Längsachse 3 ausgebildet. Das Dichtungselement 50 ist auch rotationssymmetrisch entlang der Längsachse 3 ausgebildet und mit dem Stutzenelement 10 verbunden. Das Dichtungselement 50 erstreckt sich in dem Kabelkanal 11 und weist eine Geometrie auf, die ein Abdichten eines in den Kabelkanal 11 eingeführten Kabels ermöglicht. Hierzu liegt ein erstes Ende des Dichtungselements 50 an dem Stutzenelement 10 an und weist an diesem ersten Ende einen maximalen Durchmesser auf. Der Durchmesser des Dichtungselements 50 reduziert sich von dem ersten Ende bis zu einem zweiten Ende des Dichtungselements 50. Hierbei weist das Dichtungselement 50 an dem zweiten Ende einen minimalen Durchmesser auf. Um eine sichere Abdichtung zu erzielen muss dieser minimale Durchmesser kleiner sein als ein Durchmesser eines einzuführenden Kabels. Durch eine bevorzugte Ausgestaltung des Dichtungselements 50 aus einem elastischen Material können unterschiedliche Kabel mit unterschiedlichen Durchmessern zuverlässig abgedichtet werden. Ein Teil des Dichtungselements 50 steht zudem aus dem Stutzenelement 10 hervor. Dieser Teil des Dichtungselements 50 bildet einen Dichtungsflansch, der an dem Befestigungsflansch 32 anliegt. Daher weist das Stutzenelement 10 Öffnungen auf, die vorzugsweise entlang des Umfangs des Stutzenelements 10 ausgebildet sind, durch die das Dichtungselement 50 bzw. Teile davon hindurchgeführt sind. Beispielsweise kann das Dichtungselement 50 durch die Teile, die durch diese Öffnungen hindurchgeführt sind, an dem Stutzenelement 10 befestigt werden. Alternativ kann das Dichtungselement 50 beispielsweise auch stoffschlüssig mit dem Stutzenelement 10 verbunden sein.

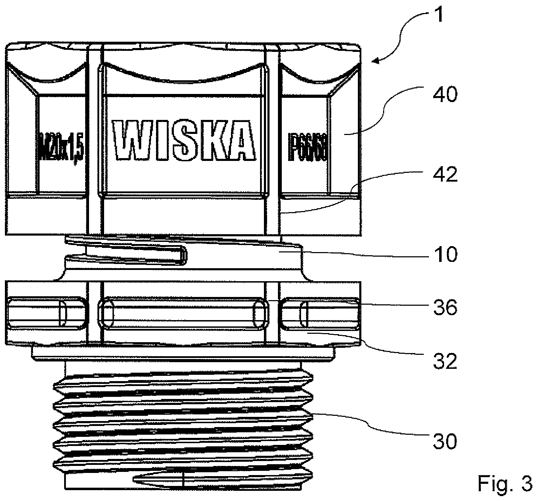

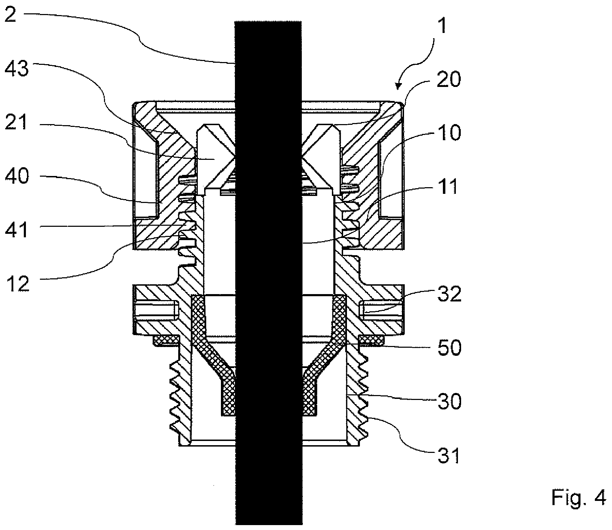

Bezugnehmend auf die Figuren 3 und 4 ist eine Kabelverschraubung 1 in einem montierten Zustand dargestellt. In diesen Figuren wird demnach die Funktionsweise der Kabelverschraubung 1 gezeigt. In dem montierten Zustand ist die Hutmutter 40 formschlüssig und/oder kraftschlüssig mit dem Stutzenelement 10 verbunden. Hierbei befindet sich die Hutmutter 40 in der zweiten Position, wobei dadurch die Klemmelemente 21 des Klemmabschnitts 20 aus der ersten Stellung, der entspannten Stellung, in die zweite Stellung bewegt, vorzugsweise verschwenkt sind. In dieser zweiten Stellung begrenzen die Klemmelemente 21 einen zweiten Innendurchmesser, der kleiner ist als der erste Innendurchmesser, und erzeugen dadurch eine Klemmwirkung.

Das Stutzenelement 10 weist zudem den Befestigungsflansch 32 und den Befestigungsbereich 30 auf. In dem hier gezeigten vormontierten Zustand ist die Hutmutter 40 von dem Befestigungsflansch 32 beabstandet angeordnet und mit dem Stutzenelement 10 verbunden.

Die Hutmutter 40 weist hierbei eine Außenfläche auf, die als Mehrkantaußenfläche 42, ausgebildet ist, um ein Drehmoment mittels eines Werkzeugs aufbringen zu können. Dadurch kann die Hutmutter 40 besonders einfach auf dem Stutzenelement 10 von der ersten Position in die zweite Position verschraubt werden.

Auch der Befestigungsflansch 32 weist eine Außenfläche auf, die als Mehrkantaußenfläche 36 ausgebildet ist. Dieser Befestigungsflansch 32 ist zwischen dem Abschnitt des Stutzenelements 10, an dem die Hutmutter 40 angeordnet ist und von der ersten Position in die zweite Position bewegbar ist, und dem Befestigungsbereich 30 ausgebildet. Die Mehrkantaußenfläche 36 ermöglicht hierbei ein Gegenhalten beim Festziehen der Hutmutter 40 sowie beim Festziehen der Befestigungsmutter bzw. einer Schraube auf einem Außengewinde 31 des Befestigungsbereichs 30 beim Befestigen der Kabelverschraubung 1 in einer Wandöffnung. Diese Befestigung kann durch Einführen des an der Seite des Außengewindes 31 des Befestigungsbereichs 30 liegenden Endes der Kabeldurchführung 1 bis zum Anschlag am Flansch 32 und Festziehen der Befestigungsmutter 33 auf dem Außengewinde 31 erfolgen.

Figur 4 zeigt die Kabelverschraubung 1 mit einem in dem Kabelkanal 11 eingeführten Kabel 2, das innerhalb der Kabelverschraubung 1 geklemmt, zugentlastet und abgedichtet ist. In dieser Figur wird somit die Kabelverschraubung 1 in einer gespannten Montagesituation gezeigt.

Das Kabel 2 weist einen Durchmesser auf, der größer ist als der minimale Durchmesser des Dichtungselements 50. Daher wird das Dichtungselement 50 aufgrund des durch das Dichtungselement 50 hindurchgeführten Kabels 2 zumindest im Bereich des minimalen Durchmessers gedehnt. Es ist ersichtlich, dass der minimale Durchmesser des Dichtungselements 50 gemäß Figur 2 nun vergrößert ist. Dadurch wird das Dichtungselement 50 gegen die Wand des Kabels 2 gedrückt, sodass das in dem Kabelkanal 11 angeordnete Kabel 2 abgedichtet ist.

Die Hutmutter 40 weist eine innere Spannfläche 43 auf, die in Figur 4 konisch ausgebildet ist. Die Spannfläche 43 erstreckt sich hierbei von einer axialen Öffnung an einem Ende der Hutmutter 40 in Richtung des Abschnitts der Hutmutter 40, der das Innengewinde 41 der Hutmutter 40 aufweist. Hierbei ist die Spannfläche 43 ausgehend von der axialen Öffnung konisch zusammenlaufend ausgebildet. Das bedeutet, dass sich ein Innendurchmesser der Hutmutter 40 ausgehend von der axialen Öffnung in Richtung des Abschnitts der Hutmutter 40, der das Innengewinde 41 aufweist, verringert. Außenflächen der Klemmelemente 21 liegen hierbei an der Spannfläche 43 an. Vorzugsweise weist die Hutmutter 40 in dem Abschnitt, der das Innengewinde 41 aufweist, einen minimalen Innendurchmesser auf. In dem hier gezeigten Beispiel sind die Klemmelemente 21 in die zweite Stellung verschwenkt, wobei der Innendurchmesser, der durch die Klemmelemente 21 in dieser Stellung begrenzt wird, ein minimal möglicher Innendurchmesser ist. Das bedeutet, dass hier ein Kabel 2 mit einem Durchmesser, der einen durch diese exemplarisch dargestellte Kabelverschraubung klemmbaren minimalen Kabeldurchmesser darstellt, geklemmt ist. Die Klemmelemente 21 sind in diesem montierten Zustand in einer Stellung, die eine Erstreckung in axialer Richtung darstellt. Wie ersichtlich, sind die Klemmelement 21 durch die Spannfläche 43 verschwenkt. Durch den reduzierten Innendurchmesser, der durch die Klemmelemente 21 begrenzt wird, wird das Kabel 2 radial eingespannt und gegen axiale Bewegungen gesichert, also zugentlastet.

Die Klemmelemente 21 sind gemäß dieser Ausführungsform als einzelne Stege mit einer radialen Verdickung ausgebildet. Diese Klemmelemente 21 weisen zudem einen Gelenkabschnitt auf, der zwischen den Klemmelementen 21 und dem Stutzenelement 10 ausgebildet ist und ein Verschwenken der Klemmelemente 21 ermöglicht.

Auch gemäß der Ausgestaltung der Kabelverschraubung 1 in Figur 4 weist das Stutzenelement ein Außengewinde 12 auf, das mit einem Innengewinde 41 der Hutmutter 40 in Eingriff gebracht ist. Das Außengewinde 12 ist mit dem Innengewinde 41 formschlüssig und/oder kraftschlüssig verbunden und befestigt die Hutmutter 40 dadurch in der zweiten Position an dem Stutzenelement 10. Der Befestigungsbereich 30 weist das Außengewinde 31 auf, das zur Befestigung der Kabelverschraubung 1 in der Wandöffnung ausgebildet ist.

In den Figuren 5 bis 7 bzw. 5, 6 und 8 bzw. 5 bis 8 ist ein beispielhafter Fertigungsprozess der Kabelverschraubung in einzelnen Schritten dargestellt.

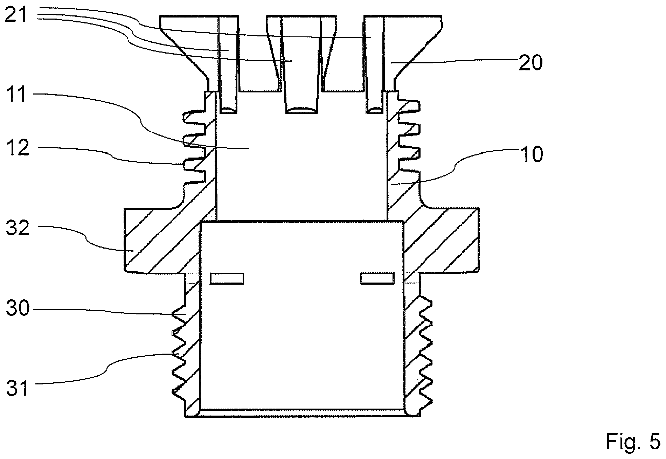

In einem ersten Schritt des hier gezeigten beispielhaften Fertigungsprozesses gemäß Figur 5 wird das Stutzenelement 10 mit einem daran angeordneten Klemmabschnitt 20, der einzelne Klemmelemente 21 aufweist, einem Befestigungsflansch 32 und einen Befestigungsbereich 30 aus einem ersten Material gespritzt. Hierbei wird das Stutzenelement 10 als ein Hohlkörper mit einem innen liegenden Kabelkanal 11 ausgebildet. In diesem ersten Schritt wird an einem Abschnitt des Stutzenelements 10 ein Außengewinde 12 ausgebildet. Entsprechend wird auch an dem Befestigungsbereich 30 ein Außengewinde 31 ausgebildet.

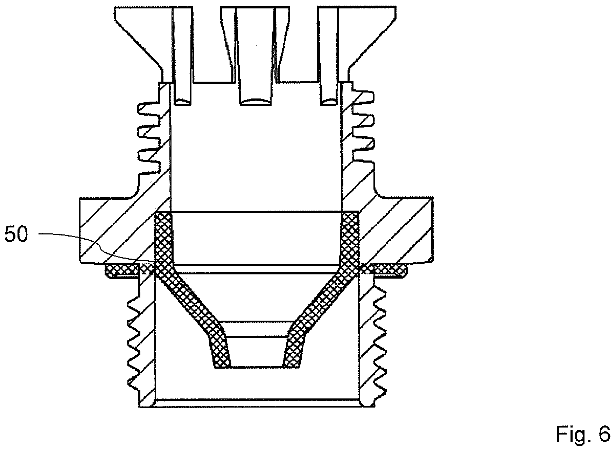

In einem zweiten Schritt des hier gezeigten beispielhaften Fertigungsprozesses gemäß Figur 6 wird das Dichtungselement 50 in dem Kabelkanal 11 angeordnet und mit dem in dem ersten Schritt gemäß Figur 5 gespritzten Stutzenelement 10 verbunden. Vorzugsweise wird hierbei das Dichtungselement 50 aus einem dritten Material an das Stutzenelement 10 angespritzt und dadurch stoffschlüssig mit dem Stutzenelement 10 verbunden.

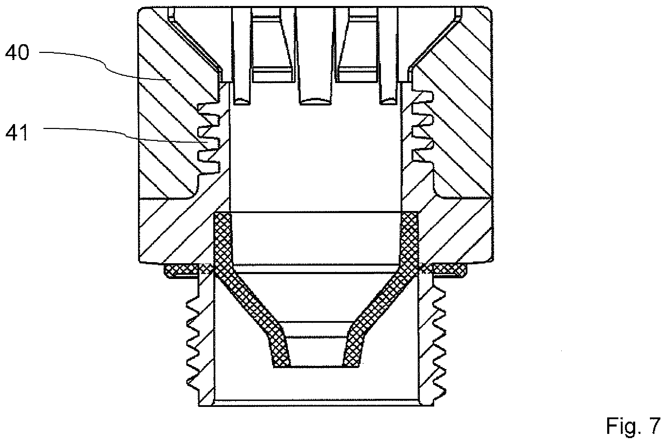

In einem dritten Schritt des hier gezeigten beispielhaften Fertigungsprozesses gemäß Figur 7 wird die Außenseite des in dem ersten Schritt gemäß Figur 5 gespritzten Stutzenelements 10 mit dem Klemmabschnitt 20, also die Außenkonturen, insbesondere das Außengewinde 12, als formgebende Elemente für die Hutmutter 40 verwendet. In diesem dritten Schritt wird die Hutmutter 40 aus einem zweiten Material an das Stutzenelement 10 und den Klemmabschnitt 20 in der ersten Stellung, in der die Hutmutter 40 an dem Befestigungsflansch 32 anliegt und die Klemmelemente 21 in einem entspannten Zustand, also einem nicht geklemmten Zustand vorliegen, angespritzt. Durch die formgebenden Elemente, insbesondere das Außengewinde 12 und/oder die Klemmelemente 21, kann hierbei eine Innenseite, vorzugsweise das Innengewinde 41, der Hutmutter 40 ausgebildet werden.

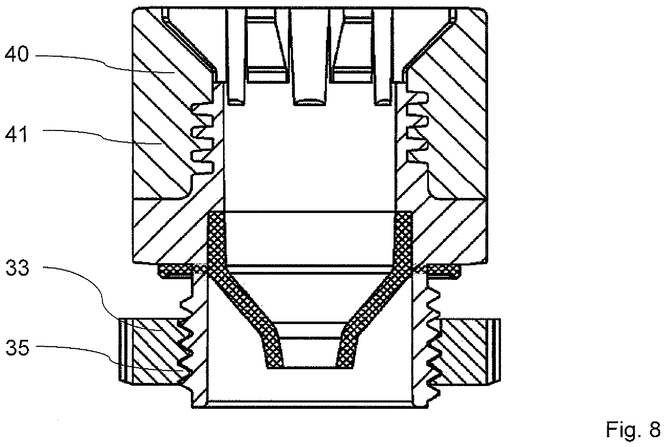

In einem alternativen dritten Schritt des hier gezeigten beispielhaften Fertigungsprozesses gemäß Figur 8 wird die Außenseite des in dem ersten Schritt gemäß Figur 5 gespitzten Stutzenelements 10 mit dem Klemmabschnitt 20 und dem Befestigungsbereich 30, also die Außenkonturen, insbesondere das Außengewinde 12, die Klemmelemente 21 und das Außengewinde 31, als formgebenden Elemente für die Hutmutter 40 und die Befestigungsmutter 33 verwendet. In diesem dritten Schritt wird die Hutmutter 40 an das Stutzenelement 10 mit dem Klemmabschnitt 20 und die Befestigungsmutter 33 an den Befestigungsbereich 30 des Stutzenelements 10 angespritzt. Die Hutmutter 40 wird hierbei auch in der ersten Stellung, in der die Hutmutter 40 an dem Befestigungsflansch 32 anliegt und die Klemmelemente 21 in dem entspannten Zustand, also dem nicht geklemmten Zustand vorliegen, angespritzt. Durch die formgebenden Elemente, insbesondere das Außengewinde 12, die Klemmelemente 21 und das Außengewinde 31, kann hierbei eine Innenseite, vorzugsweise das Innengewinde 41, der Hutmutter 40 sowie das Innengewinde 35 der Befestigungsmutter 33 ausgebildet werden.

Alternativ kann auch zunächst in einem dritten Schritt die Hutmutter 40 gemäß Figur 7 an das Stutzenelement 10 mit dem Klemmabschnitt 20 und im Anschluss daran in einem vierten Schritt die Befestigungsmutter 33 gemäß Figur 8 an den Befestigungsbereich 30 des Stutzenelements 10 angespritzt werden.

### Bezuqszeichenliste

- 1: Kabelverschraubung
- 2: Kabel
- 3: Längsachse
- 10: Stutzenelement
- 11: Kabelkanal
- 12: Außengewinde des Stutzenelements
- 20: Klemmabschnitt
- 21: Klemmelemente
- 30: Befestigungsbereich
- 31: Außengewinde des Befestigungsbereichs
- 32: Befestigungsflansch
- 33: Befestigungsmutter
- 35: Innengewinde der Befestigungsmutter
- 36: Außenfläche des Befestigungsflanschs (Mehrkantaußenfläche)
- 40: Hutmutter mit axialer Öffnung
- 41: Innengewinde der Hutmutter
- 42: Außenfläche der Hutmutter (Mehrkantaußenfläche)
- 43: Spannfläche
- 50: Dichtungselement

## Patentansprüche

1. Kabelverschraubung (1) zur Durchführung eines Kabels (2) durch eine Wandöffnung, umfassend:
- ein sich entlang einer Längsachse (3) erstreckendes Stutzenelement (10) mit einem innenliegenden, sich entlang der Längsachse (3) erstreckenden Kabelkanal (11),
- einen Klemmabschnitt (20) mit einer Mehrzahl von Klemmelementen (21), die aus einer ersten Stellung, in der die Klemmelemente einen ersten Innendurchmesser begrenzen, in eine zweite Stellung beweglich sind, in der die Klemmelemente einen zweiten Innendurchmesser begrenzen, der kleiner als der erste Innendurchmesser ist,
wobei der Klemmabschnitt (20) an dem Stutzenelement (10) angeordnet ist und das Stutzenelement und der Klemmabschnitt einstückig ausgebildet sind, und
eine Hutmutter (40) mit einer axialen Öffnung an einem Ende, die mit dem Stutzenelement (10) mechanisch gekoppelt ist, wobei die Hutmutter (40) aus einer ersten Position am Stutzenelement (10) in eine zweite Position am Stutzenelement (10) bewegbar ist, wobei die Klemmelemente durch Bewegen der Hutmutter aus der ersten Position in die zweite Position am Stutzenelement radial einwärts bewegt werden, um eine Klemmwirkung zu erzielen,
**dadurch gekennzeichnet, dass** das Stutzenelement (10) aus einem ersten Material ausgebildet ist und die Hutmutter (40) aus einem zweiten Material ausgebildet ist,
wobei das erste Material und das zweite Material aneinander angespritzt sind.

2. Kabelverschraubung nach Anspruch 1, wobei das erste Material eine erste Schwindung und das zweite Material eine zweite Schwindung aufweist, die kleiner ist als die erste Schwindung.

3. Kabelverschraubung nach einem der vorstehenden Ansprüche, wobei an einer Verbindung zwischen der Hutmutter (40) und dem Stutzenelement (10) ein Spiel auftritt.

4. Kabelverschraubung nach einem der vorstehenden Ansprüche, ferner umfassend ein schlauchförmiges Dichtungselement (50), das innerhalb des Kabelkanals (11) am Stutzenelement (10) angeordnet und mit dem Stutzenelement (10) verbunden ist,
wobei das Dichtungselement (50) aus einem dritten Material ausgebildet ist,
wobei das Dichtungselement (50) an dem Stutzenelement (10) angespritzt und stoffschlüssig mit dem Stutzenelement (10) verbunden ist.

5. Kabelverschraubung nach dem vorstehenden Anspruch 4, wobei das dritte Material einen niedrigeren Elastizitätsmodul aufweist als das erste Material und/oder das zweite Material.

6. Kabelverschraubung nach einem der vorstehenden Ansprüche,
wobei ein Abschnitt des Stutzenelements (10) eine Außenseite aufweist, die formgebend für eine Innenseite eines Abschnitts der Hutmutter (40) ist, oder
wobei ein Abschnitt der Hutmutter (40) eine Innenseite aufweist, die formgebend für eine Außenseite eines Abschnitts des Stutzenelements (10) ist.

7. Kabelverschraubung nach dem vorstehenden Anspruch 6, wobei die Außenseite des Abschnitts des Stutzenelements als ein Außengewinde (12) und die Innenseite des Abschnitts der Hutmutter (40) als ein Innengewinde (41) ausgebildet sind,
wobei das Außengewinde (12) des Stutzenelements (10) und das Innengewinde (41) der Hutmutter (40) in Eingriff gebracht sind,
wobei das Innengewinde (41) der Hutmutter (40) in der zweiten Position formschlüssig und/oder kraftschlüssig mit dem Außengewinde (12) des Stutzenelements (10) verbunden ist,
wobei vorzugsweise das Innengewinde (41) der Hutmutter (40) linksgängig ausgebildet ist.

8. Kabelverschraubung nach einem der vorstehenden Ansprüche, wobei das Stutzenelement (10) einen Befestigungsflansch (32) aufweist,
wobei die Hutmutter (40) in der ersten Position an dem Befestigungsflansch (32) anliegt und von der ersten Position in die zweite Position von dem Befestigungsflansch (32) wegbewegbar ist,
wobei die Hutmutter (40) eine Spannfläche (43) aufweist, die mit den Klemmelementen (21) zusammenwirkt und die Klemmelemente (21) in der zweiten Position in die zweite Stellung drückt,
wobei die Klemmelemente (21) in der zweiten Stellung den zweiten Innendurchmesser begrenzen, der kleiner ist als der erste Innendurchmesser.

9. Kabelverschraubung nach einem der vorstehenden Ansprüche,
wobei sich die Klemmelemente (21) vom Stutzenelement (10) erstrecken und zwischen den Klemmelementen (21) und dem Stutzenelement (10) ein Gelenkabschnitt ausgebildet ist, und
wobei sich die Klemmelemente (21) ausgehend von dem Gelenkabschnitt in der ersten Stellung nach radial auswärts erstrecken und mittels des Gelenkabschnitts nach radial einwärts verschwenkbar sind.

10. Kabelverschraubung nach dem vorstehenden Anspruch, wobei das Stutzenelement (10) einen sich axial erstreckenden Befestigungsbereich (30) mit einer Befestigungsmutter (33) aufweist, die mit dem Befestigungsbereich (30) mechanisch gekoppelt ist und aus einer dritten Position am Befestigungsbereich (30) in eine vierte Position am Befestigungsbereich (30) bewegbar ist, wobei die Befestigungsmutter (33) aus dem zweiten Material ausgebildet ist.

11. Kabelverschraubung nach dem vorstehenden Anspruch 10, wobei der Befestigungsbereich (30) ein Außengewinde (31) aufweist, das mit einem Innengewinde (35) der Befestigungsmutter (33) in Eingriff gebracht ist,
wobei das Innengewinde (35) der Befestigungsmutter (33) in der zweiten Position formschlüssig und/oder kraftschlüssig mit dem Außengewinde (31) des Befestigungsbereichs (30) verbunden ist.

12. Verfahren zum Herstellen einer Kabelverschraubung, umfassend die Schritte:
- Spritzen eines Stutzenelements (10) mit einem innenliegenden Kabelkanal aus einem ersten Material,
- und Spritzen eines an dem Stutzenelement (10) einstückig angeordneten Klemmabschnitts (20) mit Klemmelementen (21) aus dem ersten oder dem zweiten Material, wobei die Klemmelemente durch Bewegen einer Hutmutter aus einer ersten Position in eine zweite Position am Stutzenelement radial einwärts bewegbar sind, um eine Klemmwirkung zu erzielen,
- und vorzugsweise Verbinden eines Dichtungsabschnitts (50) mit dem Stutzenelement (10) in dem Kabelkanal,
- **gekennzeichnet durch** den Schritt:
- Anspritzen der Hutmutter (40) aus einem zweiten Material an das Stutzenelement (10).

13. Verfahren zum Herstellen einer Kabelverschraubung, umfassend die Schritte:
- Spritzen einer Hutmutter (40) aus einem zweiten Material,
- Anspritzen eines Stutzenelements (10) mit einem innenliegenden Kabelkanal aus einem ersten Material an die Hutmutter (40)
- und Anspritzen eines an dem Stutzenelement (10) einstückig angeordneten Klemmabschnitts (20) mit Klemmelementen (21) aus dem ersten oder zweiten Material, wobei die Klemmelemente durch Bewegen der Hutmutter aus einer ersten Position in eine zweite Position am Stutzenelement radial einwärts bewegbar sind, um eine Klemmwirkung zu erzielen,
- und vorzugsweise Verbinden eines Dichtungsabschnitts (50) mit dem Stutzenelement (10) in dem Kabelkanal.

14. Verfahren nach einem der vorstehenden Ansprüche 12 oder 13, bei dem das Verbinden des Dichtungsabschnitts mit dem Stutzenelement durch Anspritzen des Dichtungsabschnitts (50) aus einem dritten Material an das Stutzenelement (10) in dem Kabelkanal bewirkt wird.

15. Verfahren nach einem der vorstehenden Ansprüche 12 bis 14, umfassend ferner den Schritt:
- Anspritzen einer Befestigungsmutter (33) an einen Befestigungsbereich (30) des Stutzenelements (10) aus dem zweiten Material.

## Claims

1. A cable gland (1) for passing a cable (2) through a wall opening, comprising:
- a socket element (10) extending along a longitudinal axis (3) with an internal cable duct (11) extending along the longitudinal axis (3),
- a clamping portion (20) having a plurality of clamping elements (21) movable from a first position in which the clamping elements define a first inner diameter to a second position in which the clamping elements define a second inner diameter smaller than the first inner diameter,
wherein the clamping portion (20) is arranged on the socket element (10) and the socket element and the clamping portion are formed integrally, and
a cap nut (40) having an axial opening at one end and being mechanically coupled to the socket element (10), the cap nut (40) being movable from a first position on the socket element (10) to a second position on the socket element (10), wherein the clamping members are moved radially inwardly on the socket element by moving the cap nut from the first position to the second position to provide a clamping action,
**characterised in that** the socket element (10) is formed from a first material and the cap nut (40) is formed from a second material,
wherein the first material and the second material are moulded together.

2. The cable gland of claim 1, wherein the first material has a first shrinkage and the second material has a second shrinkage that is less than the first shrinkage.

3. A cable gland according to any one of the preceding claims, wherein a clearance occurs at a connection between the cap nut (40) and the socket element (10).

4. A cable gland according to any one of the preceding claims, further comprising a tubular sealing member (50) disposed within the cable duct (11) on the socket element (10) and connected to the socket element (10),
wherein the sealing element (50) is formed of a third material,
wherein the sealing element (50) is injection-moulded onto the socket element (10) and is connected to the socket element (10) by a material bond.

5. A cable gland according to claim 4, wherein the third material has a lower modulus of elasticity than the first material and/or the second material.

6. Cable gland according to any of the preceding claims,
wherein a portion of the socket element (10) has an outer surface which is formative for an inner surface of a portion of the cap nut (40), or
wherein a portion of the cap nut (40) has an inner side which is formative for an outer side of a portion of the socket element (10).

7. A cable gland according to the preceding claim 6, wherein the outside of the portion of the socket element is formed as an external thread (12) and the inside of the portion of the cap nut (40) is formed as an internal thread (41),
wherein the male thread (12) of the socket element (10) and the female thread (41) of the cap nut (40) are engaged,
wherein the internal thread (41) of the cap nut (40) is positively and/or non-positively connected to the external thread (12) of the socket element (10) in the second position,
wherein the internal thread (41) of the cap nut (40) is preferably left-handed.

8. A cable gland according to any one of the preceding claims, wherein the socket element (10) comprises a mounting flange (32),
wherein the cap nut (40) abuts the mounting flange (32) in the first position and is movable away from the mounting flange (32) from the first position to the second position,
wherein the cap nut (40) has a clamping surface (43) which cooperates with the clamping elements (21) and presses the clamping elements (21) in the second position into the second position,
wherein the clamping elements (21) in the second position delimit the second inner diameter which is smaller than the first inner diameter.

9. Cable gland according to one of the preceding claims,
wherein the clamping members (21) extend from the socket element (10) and a hinge portion is formed between the clamping members (21) and the socket element (10), and
wherein the clamping members (21) extend radially outwardly from the hinge portion in the first position and are pivotable radially inwardly by means of the hinge portion.

10. A cable gland according to the preceding claim, wherein the socket element (10) has an axially extending mounting portion (30) with a fastening nut (33) mechanically coupled to the mounting portion (30) and movable from a third position on the mounting portion (30) to a fourth position on the mounting portion (30),
wherein the fastening nut (33) is formed of the second material.

11. A cable gland as claimed in claim 10, wherein the fixing portion (30) has an external thread (31) engaged with an internal thread (35) of the fixing nut (33), wherein the internal thread (35) of the fastening nut (33) is positively and/or non-positively connected to the external thread (31) of the fastening area (30) in the second position.

12. A method of manufacturing a cable gland comprising the steps of:
- Injection moulding of a socket element (10) with an internal cable duct made of a first material,
- and injection moulding a clamping portion (20) integrally arranged on the socket element (10) with clamping elements (21) of the first or the second material, the clamping elements being radially inwardly movable by moving a cap nut from a first position to a second position on the socket element to achieve a clamping effect,
- and preferably connecting a sealing portion (50) to the socket element (10) in the cable duct,
**characterized by**:
- moulding the cap nut (40) of a second material onto the socket element (10).

13. A method of manufacturing a cable gland comprising the steps of:
- Injection of a cap nut (40) from a second material,
- Moulding a socket element (10) with an internal cable duct made of a first material onto the cap nut (40)
- and moulding a clamping portion (20), which is integrally arranged on the socket element (10), with clamping elements (21) of the first or second material, wherein the clamping elements are radially inwardly movable by moving the cap nut from a first position to a second position on the socket element in order to achieve a clamping effect,
- and preferably connecting a sealing portion (50) to the socket element (10) in the cable duct.

14. A method according to any one of the preceding claims 12 or 13, wherein the bonding of the sealing portion to the socket element is effected by moulding the sealing portion (50) of a third material to the socket element (10) in the cable duct.

15. A method according to any one of the preceding claims 12 to 14, further comprising the step of:
- Moulding a fastening nut (33) onto a fastening region (30) of the socket element (10) made of the second material.

## Revendications

1. Presse-étoupe (1) pour le passage d'un câble (2) à travers une ouverture murale, comprenant :
- un élément de tubulure (10) s'étendant le long d'un axe longitudinal (3) avec un canal de câble (11) intérieur, s'étendant le long de l'axe longitudinal (3),
- une section de blocage (20) avec une pluralité d'éléments de blocage (21) qui sont mobiles d'une première position, dans laquelle les éléments de blocage délimitent un premier diamètre intérieur, dans une seconde position, dans laquelle les éléments de blocage délimitent un second diamètre intérieur qui est inférieur au premier diamètre intérieur,
dans lequel la section de blocage (20) est agencée au niveau de l'élément de tubulure (10) et l'élément de tubulure et la section de blocage sont réalisés d'un seul tenant, et
un écrou borgne (40) avec une ouverture axiale à une extrémité qui est mécaniquement couplée à l'élément de tubulure (10), dans lequel l'écrou borgne (40) est mobile d'une première position au niveau de l'élément de tubulure (10) dans une seconde position au niveau de l'élément de tubulure (10), dans lequel les éléments de blocage sont déplacés par déplacement de l'écrou borgne de la première position dans la seconde position au niveau de l'élément de tubulure radialement vers l'intérieur afin d'obtenir une action de blocage,
**caractérisé en ce que** l'élément de tubulure (10) est réalisé en un premier matériau et l'écrou borgne (40) est réalisé en un deuxième matériau,
dans lequel le premier matériau et le deuxième matériau sont moulés par injection l'un sur l'autre.

2. Presse-étoupe selon la revendication 1, dans lequel le premier matériau présente un premier rétrécissement et le deuxième matériau présente un second rétrécissement qui est inférieur au premier rétrécissement.

3. Presse-étoupe selon l'une quelconque des revendications précédentes, dans lequel un jeu survient au niveau d'une liaison entre l'écrou borgne (40) et l'élément de tubulure (10).

4. Presse-étoupe selon l'une quelconque des revendications précédentes, comprenant de plus un élément de joint d'étanchéité (50) en forme de tuyau qui est agencé dans le canal de câble (11) au niveau de l'élément de tubulure (10) et est relié à l'élément de tubulure (10),
dans lequel l'élément de joint d'étanchéité (50) est réalisé en un troisième matériau,
dans lequel l'élément de joint d'étanchéité (50) est moulé par injection sur l'élément de tubulure (10) et est relié par matière à l'élément de tubulure (10).

5. Presse-étoupe selon la revendication précédente 4, dans lequel le troisième matériau présente un module d'élasticité plus faible que le premier matériau et/ou le deuxième matériau.

6. Presse-étoupe selon l'une quelconque des revendications précédentes, dans lequel une section de l'élément de tubulure (10) présente un côté extérieur qui est conformé pour un côté intérieur d'une section de l'écrou borgne (40), ou
dans lequel une section de l'écrou borgne (40) présente un côté intérieur qui est conformé pour un côté extérieur d'une section de l'élément de tubulure (10).

7. Presse-étoupe selon la revendication précédente 6, dans lequel le côté extérieur de la section de l'élément de tubulure est réalisé comme un filet extérieur (12) et le côté intérieur de la section de l'écrou borgne (40) est réalisé comme un filet intérieur (41),
dans lequel le filet extérieur (12) de l'élément de tubulure (10) et le filet intérieur (41) de l'écrou borgne (40) sont mis en prise,
dans lequel le filet intérieur (41) de l'écrou borgne (40) dans la seconde position est relié par complémentarité de formes et/ou à force au filet extérieur (12) de l'élément de tubulure (10),
dans lequel de préférence, le filet intérieur (41) de l'écrou borgne (40) est réalisé avec un pas à gauche.

8. Presse-étoupe selon l'une quelconque des revendications précédentes, dans lequel l'élément de tubulure (10) présente une bride de fixation (32),
dans lequel l'écrou borgne (40) dans la première position repose contre la bride de fixation (32) et est mobile de la première position dans la seconde position loin de la bride de fixation (32),
dans lequel l'écrou borgne (40) présente une surface de serrage (43) qui coagit avec les éléments de blocage (21) et presse dans la deuxième position les éléments de blocage (21) dans la seconde position,
dans lequel les éléments de blocage (21), dans la seconde position, restreignent le second diamètre intérieur, qui est inférieur au premier diamètre intérieur.

9. Presse-étoupe selon l'une quelconque des revendications précédentes,
dans lequel les éléments de blocage (21) s'étendent depuis l'élément de tubulure (10) et une section d'articulation est réalisée entre les éléments de blocage (21) et l'élément de tubulure (10), et
dans lequel les éléments de blocage (21) s'étendent radialement vers l'extérieur à partir de la section d'articulation dans la première position et sont pivotants radialement vers l'intérieur au moyen de la section d'articulation.

10. Presse-étoupe selon la revendication précédente, dans lequel l'élément de tubulure (10) présente une zone de fixation (30) s'étendant axialement avec un écrou de fixation (33) qui est mécaniquement couplé à la zone de fixation (30) et est mobile d'une troisième position au niveau de la zone de fixation (30) dans une quatrième position au niveau de la zone de fixation (30),
dans lequel l'écrou de fixation (33) est réalisé en le deuxième matériau.

11. Presse-étoupe selon la revendication précédente 10, dans lequel la zone de fixation (30) présente un filet extérieur (31) qui est mis en prise avec un filet intérieur (35) de l'écrou de fixation (33),
dans lequel le filet intérieur (35) de l'écrou de fixation (33) dans la seconde position est relié par complémentarité de formes et/ou à force au filet extérieur (31) de la zone de fixation (30).

12. Procédé de fabrication d'un presse-étoupe comprenant les étapes consistant à :
- injecter un élément de tubulure (10) avec un canal de câble intérieur en un premier matériau,
- et injecter une section de blocage (20) agencée d'un seul tenant au niveau de l'élément de tubulure (10) avec des éléments de blocage (21) en le premier ou le deuxième matériau, dans lequel les éléments de blocage sont mobiles radialement vers l'intérieur par déplacement d'un écrou borgne d'une première position dans une deuxième position au niveau de l'élément de tubulure afin d'obtenir une action de blocage,
- et de préférence relier une section de joint d'étanchéité (50) à l'élément de tubulure (10) dans le canal de câble,
- **caractérisé par** l'étape consistant à :
- mouler par injection l'écrou borgne (40) en un deuxième matériau sur l'élément de tubulure (10).

13. Procédé de fabrication d'un presse-étoupe, comprenant les étapes consistant à :
- injecter un écrou borgne (40) en un deuxième matériau,
- mouler par injection un élément de tubulure (10) avec un canal de câble intérieur en un premier matériau sur l'écrou borgne (40),
- et mouler par injection une section de blocage (20) agencée d'un seul tenant au niveau de l'élément de tubulure (10) avec des éléments de blocage (21) en le premier ou deuxième matériau, dans lequel les éléments de blocage sont mobiles radialement vers l'intérieur par déplacement de l'écrou borgne d'une première position dans une deuxième position au niveau de l'élément de tubulure afin d'obtenir une action de blocage,
- et de préférence relier une section de joint d'étanchéité (50) à l'élément de tubulure (10) dans le canal de câble.

14. Procédé selon l'une quelconque des revendications précédentes 12 ou 13, pour lequel la liaison de la section de joint d'étanchéité avec l'élément de tubulure est provoquée par moulage par injection de la section de joint d'étanchéité (50) en un troisième matériau sur l'élément de tubulure (10) dans le canal de câble.

15. Procédé selon l'une quelconque des revendications précédentes 12 à 14, comprenant de plus l'étape consistant à :
- mouler par injection un écrou de fixation (33) sur une zone de fixation (30) de l'élément de tubulure (10) en le deuxième matériau.
